# EUROPEAN PATENT APPLICATION

(11) **EP 1 564 996 A1**
(43) Date of publication of application: **17.08.2005**
(21) Application number: 03730220.5
(22) Date of filing: 10.06.2003
(51) Int. Cl.: H04N 7/18, H04M 11/02

(54) **ENTRANCE VIDEO SURVEILLANCE SYSTEM**

(30) Priority: 11.06.2002 ES 200201372
(71) Applicant: TELEVES, S.A., 15706 Santiago de Compostela (ES)
(72) Inventor: UNA PINEIRO, Rafael, E-15220 Bertamirans-Ames (ES); RAMOS GARCIA, Manuel, E-27320 Quiroga (ES)
(74) Representative: Dosterschill, Peter, Dr.
(86) International application number: PCT/ES2003/000281
(87) International publication number: WO 2003/105479

(57) **Abstract**

Video surveillance terminal comprising elements for exchanging audio with street units, a video monitor for viewing images captured by video cameras installed in the streets units and a device for opening the door of entrance which is provided with means of receiving television channels. The means of receiving television channels comprise a tuner and a modulator and the video monitor comprises a touch screen. Furthermore an antenna for the direct reception of television channels and a user interface for the selection of channels and for adjusting parameters is provided and which is constituted of a keyboaord and/or a touch screen.

## Description

This invention relates to a video entry system terminal according to claim 1.

Different video entry systems are known that generally include one or several outside modules and various user terminals.

The outside modules, which are situated outside the corresponding access door, basically consist of a video camera, a microphone-speaker set and a buzzer for calling.

The user terminals are situated in the users' homes and consist of a video monitor, a telephone handset and devices for opening the access door.

Communication is established between the outside module and the user's terminal when someone uses the buzzer to call.

The communication allows a two-directional audio exchange and allows the user to view on the video monitor the images captured by the video camera situated in the outside module from which the call is made. It also allows the access door to be opened from the user's terminal.

A video entry system terminal is disclosed in the Spanish patent ES 2120380.

These user terminals have the drawback that they may only be used for the video entry service with the resulting waste that this involves. Likewise, this involves having many terminals for the various services with the drawbacks that this involves.

The objective of this invention is to develop a video entry system that can be used as a terminal for other services.

This objective is attained using a video entry system terminal established in the claims.

The invention has a plurality of advantages.

In one example according to the invention, a video entry system terminal has means for receiving Television channels. A terminal like this allows it to be used as a television receiver, which also makes it possible to use it for entertainment, information, education, etc. and all the purposes in general that television has.

Another example of a video entry system terminal according to the invention is characterised in that the means of receiving Television channels consist of a tuner/demodulator. This allows the tuning and reception of any television channel that is broadcast in the area by selecting the channel to be received at all times.

Another example of a video entry system terminal according to the invention is characterised in that the video monitor consists of a touch screen, making it possible to use said monitor for other purposes such as the simple entry any kind of data into the video door entry system terminal.

Another example of a video entry system terminal according to the invention is characterised in that it has a user interface for entering data, allowing the different television, video door entry system, etc. services to be programmed.

Another example of a video entry system terminal according to the invention is characterised in that the user interface consists of a keypad.

Another example of a video entry system terminal according to the invention is characterised in that the user consists of a touch screen for the video monitor. This makes it easier to enter data by means of an on-screen menu and allows one to navigate using said menus. It also reduces space by making the keypad unnecessary.

As well as video entry system and television services, the video entry system terminal according to the invention may also include other services such as:
An intercom between the components connected to the Video entry system network.
Connection to the telephone switchboard.
Internet access.

To carry out all these functions the video entry system terminal according to the invention includes an analogue and digital TV tuner/demodulator, a device for entering text, a TFT touch screen, a DATA-VOICE modem and a microcontroller with flash memory.

In a Video entry system terminal like that of the invention the signal from the video entry system network contains television channels and/or specific video entry system network information so that the terminal can be connected to said network. This different information is separated by the filtering system. All the specific network information is demodulated, or modulated if it is generated by the terminal itself, in the DATA-VOICE modem. This information is what allows the video entry system terminal access to the intercom, switchboard, low-speed data and Internet access services. The device for entering text, the keypad and TFT touch screen carry out the interface functions that allow the aforementioned services to be enjoyed. The microcontroller provides the mechanism that allows connections to be made between the video entry system terminal and the network base, as well as managing the terminal's different components. Lastly, there is a power supply, allowing both continuous and alternating current, that provides the power for all the devices in the circuit to work.

For the reception of television signals the video entry system terminal according to the invention uses a tuner which consists of a tuning section with tracking filters and another section made up of mixers and oscillators that will be used according to the input frequency that is to be tuned. The filter section is made with three input stages depending on which band is to be tuned. Each of them is made up of two filter stages, the tuning of which is controlled by the same current that controls the oscillator that attacks that mixer of the same band. The outputs of these sections enter a three-band mixer/oscillator. Each oscillator is controlled by a current the same as that which controls the filters. Said current is generated in the PLL which is controlled by the microcontroller by bus 12C. The output of the tuner is in 38.9Mhz and is entered into both the analogue and digital demodulators. The output from each of these stages, audio and video, is entered into a switch that allows the type of transmission to be seen on the screen to be selected. All the devices involved in the demodulation are controlled by the processor.

By way of an example, and based on the figures given below, a preferred nonlimiting embodiment of a Video entry system terminal according to the invention is described as follows.
- Figure 1: is a block diagram of the video entry system terminal according to the invention.
- Figure 2: is a block diagram of the television reception system of the video entry system terminal according to the invention.
- Figure 3: shows an alternative embodiment of the video entry system terminal according to the invention.
- Figure 4: shows an alternative embodiment of the video entry system terminal according to the invention.

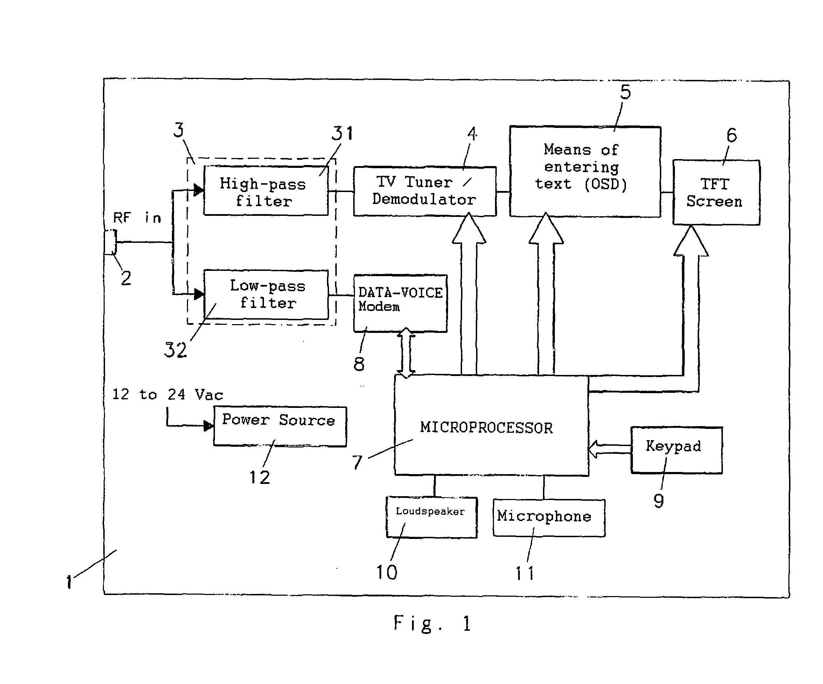

As can be seen in figure 1, the video entry system terminal consists of means of connection (connectors) 2, an input filter system 3 consisting of a high-pass filter 31 and a low-pass filter 32, a TV tuner/demodulator 4, a device for entering text 5, a TFT touch screen 6, a Microprocessor 7, a DATA-VOICE Modem 8, a Keypad 9, a Loudspeaker 10, a microphone 11 and a power supply 12.

The Video entry system terminal 1 is connected to the video entry system and/or Television network by the connectors 2. The input filter system 3 separates the Television signals from the specific signals of the video entry system network. The latter are entered (in the event of reception) or extracted (in the case of transmission) in the DATA-VOICE Modem 8.

The Television signals within the 470 to 869 Mhz band are filtered in 3 and entered into the TV tuner/demodulator 4. Then the television signal passes through a device for entering text 5 and is then presented on a TFT screen 6.

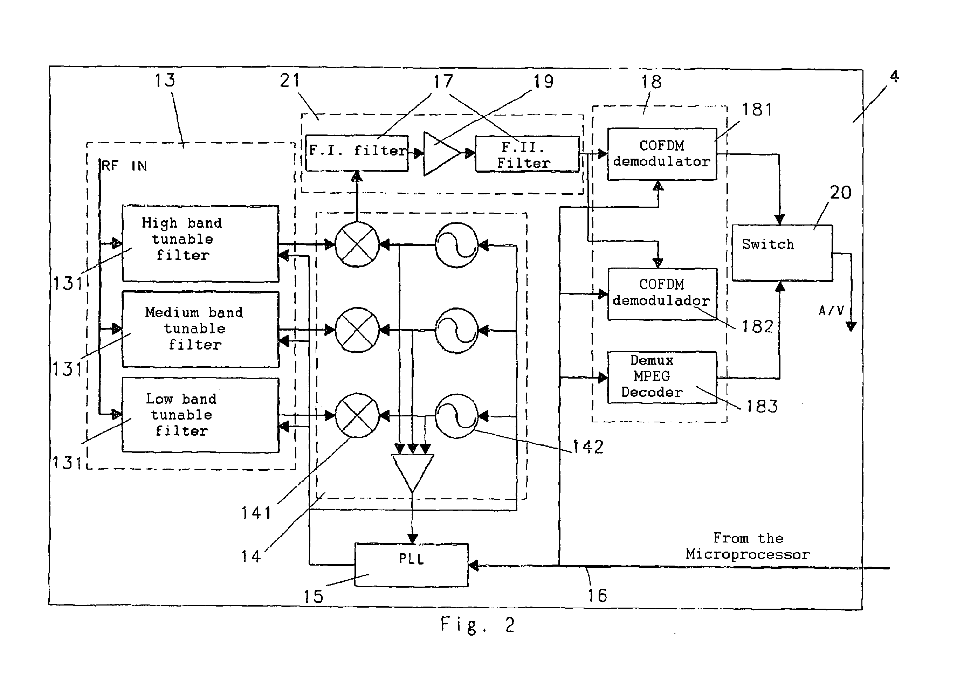

Figure 2 shows the block diagram of the TV tuner/demodulator 4.

As can be seen, said device 4 consists of a tuner section consisting of a first filter stage 13 using tracking filters and a mixer stage 14 made up of mixers 141 and oscillators 142.

The filter stage 13 consists of three input filter sections 131 that depend on which band is to be tuned. Each of them is made up of two tracking filters, the tuning of which is controlled by the same current that controls the corresponding oscillator 142 that attacks the mixer 141 of the same band.

The outputs from the sections in 131 are entered into the mixers 141. Each oscillator 142 is controlled by a current the same as that which controls the tracking filters in the corresponding filter section 131.

Said current is generated in the PLL 15, which is controlled by the microprocessor 7 by a Bus 12C 16.

The output from the mixers 141 is entered into an intermediate filter stage 21 at a frequency of 38.9Mhz. The intermediate filter stage 21 consists of two filters 17 and an amplifier 19.

Once the signal has been filtered, it is entered into the demodulators 18, which are both analogue 181 and digital 182, and in the latter case the signal is then entered into a MPEG decoder 183. The outputs (audio and video) from each of the demodulators 18 are entered into a switch 20 which allows the type of transmission to be seen on the screen 6 to be selected. The signal selected in the switch 20 is entered into a device for entering texts 5 and is then entered onto the screen 6 (figure 1).

All the devices involved in the demodulation are controlled by the microprocessor 7 by means of different buses, especially Bus 12C 16.

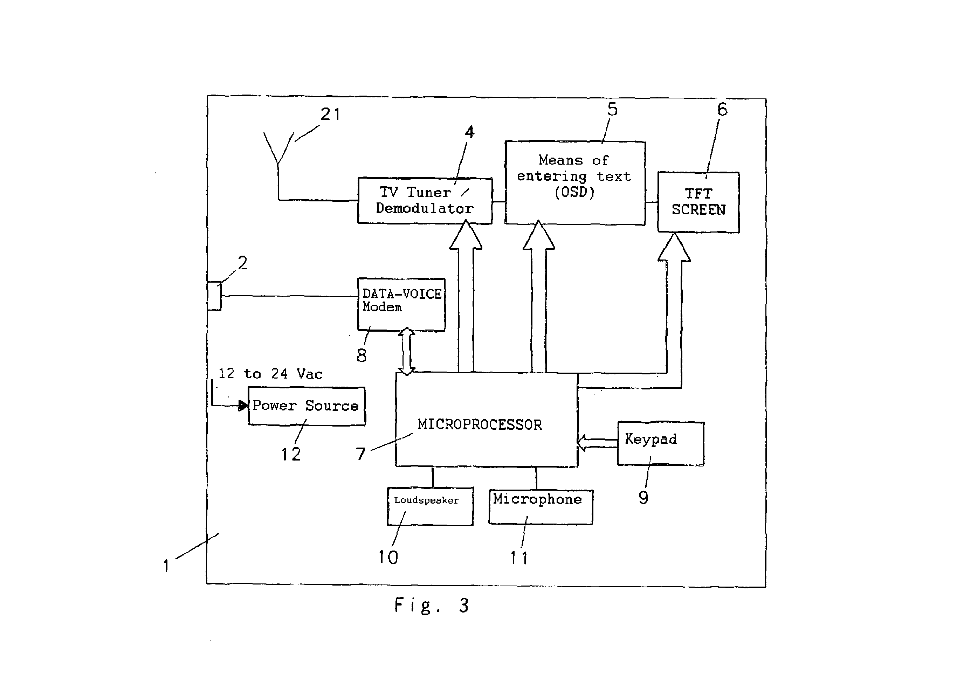

Figure 3 shows an alternative embodiment of the invention, in which it can be seen that the video entry system terminal 1 has a built-in aerial 21 that allows Television channels to be received directly. Said aerial 21 is connected directly to the input of the TV tuner/demodulator 4.

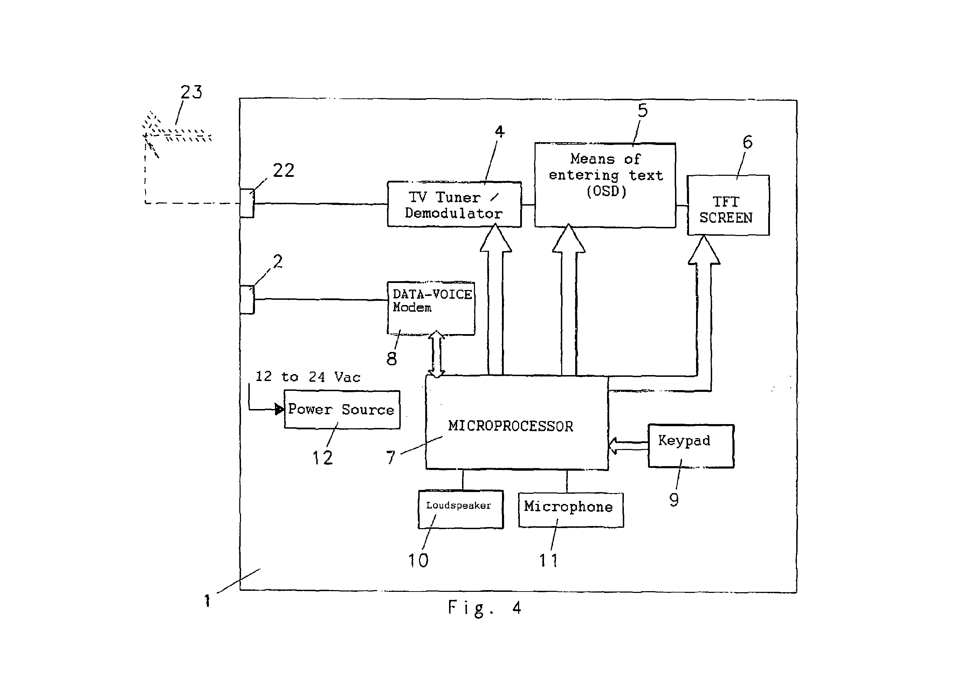

Figure 4 shows an alternative embodiment of the invention, in which it can be seen that the video entry system terminal 1 has coaxial connectors to connect an external television aerial 23 or to a MATV/SMATV network and connectors 2 to connect to the video entry system network.

In this case both connections are independent, as the connections are made directly from the video entry system network to the DATA-VOICE modem 8 and from the external television aerial 23 or from the MATV/SMATV network to the TV tuner/demodulator 4.

### Reference list:

- 1.-: Video entry system terminal
- 2.-: Means of connection (connectors)
- 3.-: Input filter system
- 31.-: High-pass filter
- 32.-: Low-pass filter
- 4.-: TV tuner/demodulator
- 5.-: Devise for entering Text (OSD)
- 6.-: Screen
- 7.-: Microprocessor
- 8.-: DATA-VOICE MODEM
- 9.-: Keypad
- 10.-: Loudspeaker
- 11.-: Microphone
- 12.-: Power Supply
- 13.-: Filter Stage
- 131.-: Filter Section
- 14.-: Mixer Stage
- 141.-: Mixers
- 142.-: Oscillators
- 15.-: Phase Locked Loop (PLL)
- 16.-: Bus 12C
- 17.-: Filters
- 18.-: Demodulators
- 19.-: Amplifier
- 20.-: Switch
- 21.-: Aerial
- 22.-: Coaxial Connectors
- 23.-: External Television Aerial

## Claims

1. Video entry system terminal consisting of means of audio exchange with outside modules, a video monitor to view the images captured by the video cameras situated in the outside modules and a device for opening the access door.
**Characterised:**
**In that** it has means of receiving Television channels.

2. Video entry system terminal, according to claim 1, **characterised in that** the means of receiving Television channels consist of a tuner and modulator.

3. Video entry system terminal, according to claims 1 and 2, **characterised in that** the video monitor consists of a touch screen.

4. Video entry system terminal, according to claims 1 and 2, **characterised in that** it has an aerial for directly receiving Television channels.

5. Video entry system terminal, according to the previous claims,
**characterised in that** it has a user interface for selecting channels and adjusting parameters.

6. Video entry system terminal, according to the previous claims,
**characterised in that** the user interface consists of a keypad.

7. Video entry system terminal, according to claims 1 and 2, **characterised in that** the user interface consists of a touch screen.
